# EUROPEAN PATENT APPLICATION

(11) **EP 4 585 028 A1**
(43) Date of publication of application: **16.07.2025**
(21) Application number: 24218526.2
(22) Date of filing: 10.12.2024
(51) Int. Cl.: A01D 34/00, A01D 34/28, A01D 34/64, A01D 34/66, A01B 69/00

(54) **MOWER SYSTEM HEADLAND TURN CONTROL**

(30) Priority: 12.01.2024 US 202418411607
(71) Applicant: Deere & Company, Moline, IL 61265 (US)
(72) Inventor: Jones, Austin J., Mannheim (DE); Naeger, Robert J., Mannheim (DE)
(74) Representative: Stein, Stefan

(57) **Abstract**

A crop mower system includes a traction unit connected to a mower implement via a drawbar. A controller is operable to identify an existing headland windrow extending transverse to a current direction of travel of the mower implement, and identify a standing crop edge extending transverse to the current direction of travel of the mower implement and positioned prior to the existing headland windrow. When a leading edge of the cutter system reaches the standing crop edge, the controller automatically raises the mower implement from a cutting height to a raised height prior to the mower implement crossing the existing headland windrow, automatically swings the mower implement to another side, and automatically aligns the traction unit for a subsequent mower pass.

## Description

### TECHNICAL FIELD

The disclosure generally relates to a crop mower system for cutting crop material and forming the cut crop material into a windrow.

### BACKGROUND

A crop mower system is configured for cutting or mowing standing crop material in a field, and forming the cut crop material into a swath or windrow. The windrow of the cut crop material may be gathered and formed into a bale with a baler implement. The crop mower system may include, but is not limited to, a traction unit (e.g., an agricultural tractor) that pulls a mower implement (e.g., a mower conditioner). Often, the mower implement is connected to the traction unit via a pivotable drawbar. The relative position of the drawbar may be controlled to position the mower implement directly behind the traction unit, or on either the left lateral side or the right lateral side of the traction unit.

To begin harvesting a field, an operator often make, for example, one to three perimeter passes around an outer perimeter of the field. Theses perimeter passes form a headland in which the mower system may maneuver during harvest of the remainder of the field. Once the headland is formed by the perimeter passes, the operator may then commence a back-and-forth harvest pattern in which the mower system moves from a first end of the field to an opposite second end of the field in a first mower pass, turns around in the headland along the second end of the field, and then makes a second mower pass adjacent the first mower pass from the second end of the field back to the first end of the field. This back-and-forth mowing pattern may be repeated to harvest the remainder of the field.

When executing the back-and-forth mowing pattern, the operator may position the mower implement to a lateral side of the traction unit. By doing so, the traction unit may straddle a previously formed windrow between the traction elements of the traction unit, so not to drive over the formed windrow or the standing crop material, while the mower implement is positioned within the standing crop material for harvesting. Upon reaching the headland, the operator must execute a headland turn. In order to execute the headland turn, the operator manually maneuvers both the traction unit and the mower implement into their proper harvest positions relative to each other, the standing crop, and the previously formed windrow for the next or subsequent mowing pass. Properly and timely executing a headland turn is a difficult maneuver, particularly for inexperienced operators.

### SUMMARY

A crop mower system is provided. The crop mower system includes a traction unit configured to move relative to a ground surface, and a mower implement. The mower implement includes a cutter system configured for cutting standing crop material, and a forming panel configured for forming the cut crop material into a windrow. A drawbar includes a first end pivotably coupled to a rearward end of the traction unit and a second end pivotably coupled to the mower implement. The traction unit pulls the mower implement across the ground surface via the drawbar. A controller includes a processor and a memory having a headland turn algorithm stored thereon. The processor is operable to execute the headland turn algorithm to initiate an auto-turn sequence in which the controller automatically raises the mower implement from a cutting height to a raised height, automatically changes a lateral position of the mower implement relative to the traction unit to reposition the mower implement from a first lateral side of the traction unit to a second lateral side of the traction unit, and automatically lowers the mower implement from the raised height to the cutting height after the lateral position of the mower implement has been changed from the first lateral side of the traction unit to the second lateral side of the traction unit.

In one aspect of the disclosure, the processor is operable to execute the headland turn algorithm to identify an existing headland windrow extending transverse to a current direction of travel of the mower implement while executing a first mower pass. The controller may further identify a standing crop edge extending transverse to the current direction of travel of the mower implement and positioned prior to the existing headland windrow relative to the current direction of travel of the mower implement while executing the first mower pass.

In one implementation of the disclosure, the processor is operable to execute the headland turn algorithm to automatically initiate the auto-turn sequence when a leading edge of the cutter system is within a pre-defined distance of the standing crop edge. For example, the controller may initiate the auto-turn sequence when the leading edge of the cutter system reaches the standing crop edge, or when the leading edge of the cutter system reaches or comes within the pre-defined distance of the standing crop edge. In one example implementation, the controller may initiate the auto-turn sequence when the leading edge of the cutter system reaches a pre-defined distance of approximately one foot of the standing crop edge. It should be appreciated that the pre-defined distance may be defined to equal some other value, either before or after the standing crop edge, not specifically mentioned or described herein. In another implementation of the disclosure, the processor is operable to execute the headland turn algorithm to initiate the auto-turn sequence in response to a user input command, e.g., an operator touching a button or switch commanding the auto-turn sequence.

In one aspect of the disclosure, the processor may be operable to execute the headland turn algorithm to automatically raise the mower implement from the cutting height to the raised height prior to the mower implement crossing the existing headland windrow, whereby the cutter system of the mower implement passes over the existing headland windrow for reducing disturbance of the existing headland windrow.

In one aspect of the disclosure, the processor may be operable to execute the headland turn algorithm to, when the leading edge of the cutter system reaches the standing crop edge, automatically align the traction unit relative to the standing crop edge for a second mower pass. When the traction unit is aligned for the second mower pass, the traction unit is positioned to straddle a first windrow formed during the first mower pass and the mower implement is positioned to cut the standing crop material adjacent the first windrow from the first mower pass.

In one aspect of the disclosure, the processor may be operable to execute the headland turn algorithm to, when the leading edge of the cutter system moves past the existing headland windrow during the second mower pass, automatically lower the mower implement from the raised height to the cutting height prior to the leading edge of the cutter system crossing the standing crop edge.

In one aspect of the disclosure, the traction unit includes a prime mover configured for generating torque. At least one driven ground engaging element is configured for receiving torque from the prime mover and transferring the torque to the ground surface to propel the traction unit across the ground surface. The traction unit further includes at least one direction controlling ground engaging element configured for controlling a direction of travel of the traction unit relative to a central longitudinal axis of the traction unit.

In one aspect of the disclosure, the crop mower system may include a swing position sensor. The swing position sensor may be arranged to detect data related to an angular position of the drawbar relative to one of the mower implement or the traction unit. The processor may be operable to execute the headland turn algorithm to determine a position of the mower implement relative to the traction unit from data sensed by the swing position sensor. The crop mower system may further include a swing actuator interconnecting the drawbar and one of the traction unit or the mower implement. The processor may be operable to execute the headland turn algorithm to control the swing actuator to change a position of the mower implement relative to the traction unit, e.g., swing the mower implement from the first lateral side of the traction unit to the second lateral side of the traction unit.

In one aspect of the disclosure, the crop mower system may further include a lift position sensor. The lift position sensor may be arranged to detect data related to a height of the mower implement relative to the ground surface. The processor may be operable to execute the headland turn algorithm to determine a height of the mower implement relative to the ground surface from data sensed by the lift position sensor. The crop mower system may further include a lift actuator coupled to the mower implement. The processor may be operable to execute the headland turn algorithm to control the lift actuator to move the mower implement between the cutting height and the raised height. For example, the controller may raise the mower implement when completing the first mower pass, and/or may lower the mower implement to begin the second mower pass.

In one aspect of the disclosure, the crop mower system may further include a steering direction sensor. The steering direction sensor may be arranged to detect data related to a steering direction of the traction unit relative to a central longitudinal axis of the traction unit. The processor may be operable to execute the headland turn algorithm to determine a steering direction of the traction unit relative to the central longitudinal axis of the traction unit from data sensed by the steering direction sensor. The crop mower system may further include a steering actuator. The steering actuator may be coupled to the direction controlling ground engaging element of the traction unit. The processor may be operable to execute the headland turn algorithm to control the steering actuator to control a direction of travel of the traction unit. For example, the controller may control the steering actuator to align the traction unit for the second mower pass.

In one aspect of the disclosure, the crop mower system may include an object detection sensor. The object detection sensor may be arranged to detect data related to the existing headland windrow and/or the standing crop edge. The object detection sensor may be disposed in communication with the controller for communicating sensed data to the controller whereby the controller may identify the existing headland windrow and the standing crop edge.

Accordingly, the crop mower system described herein may automatically execute a headland turn during a harvest operation, thereby reducing operator control and potential mistakes. The automated headland turn may include, for example, automatically raising the mower implement at the completion of the first mower pass to avoid the mower implement interfering with the headland windrows, automatically swinging the mower implement from the first lateral side of the traction unit for the second lateral side of the traction unit in preparation for the second mower pass, and steering the traction unit to align the traction unit for the second mower pass. Automating these procedures reduce the operational complexity of the crop mower system, thereby enabling operators of all experience levels to effectively and efficiently conduct harvest operations.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic perspective view of a crop mower system.
FIG. 2 is a schematic perspective view of a mower implement of the crop mower system.
FIG. 3 is a schematic plan view of the crop mower system completing a first mower pass of a field.
FIG. 4 is a schematic plan view of the crop mower system executing a headland turn.
FIG. 5 is a schematic plan view of the crop mower system aligned to begin a second mower pass of the field.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

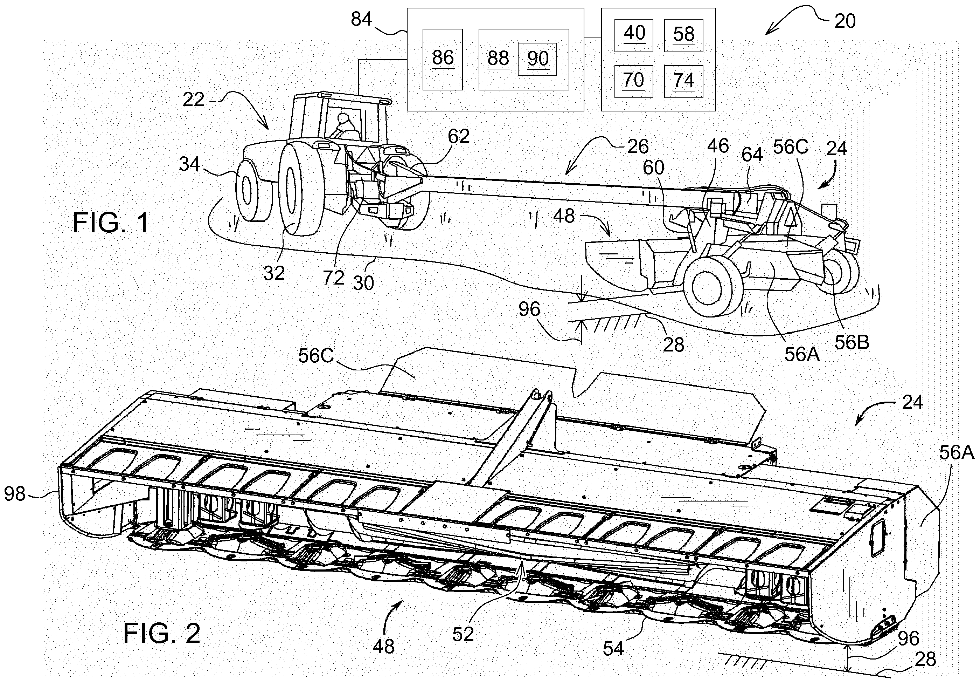

Referring to the Figures, wherein like numerals indicate like parts throughout the several views, a crop mower system is generally shown at 20. Referring to FIG. 1, the crop mower system 20 includes a traction unit 22 connected to a mower implement 24 via a drawbar 26. The mower implement 24 is drawn or pulled across a ground surface 28 of a field 30 by the traction unit 22. The mowing implement may be pulled by the traction unit 22 to mow or cut standing crop material e.g., hay, straw, or grasses, etc., and form the cut crop material into a swath or windrower.

The traction unit 22 is configured to move relative to the ground surface 28. The traction unit 22 may include a moveable platform, such as but not limited to, an agricultural tractor, a truck, a tracked vehicle, etc. The traction unit 22 includes a prime mover configured for generating torque. The prime mover may include, but is not limited to, an internal combustion engine, an electric motor, a combination of each, or some other source of motive power.

The traction unit 22 further includes at least one driven ground engaging element 32 and at least one direction controlling ground engaging element 34. The driven ground engaging element 32 is configured for receiving torque from the prime mover and transferring the torque to the ground surface 28 to propel the traction unit 22 across the ground surface 28. The at least one direction controlling ground engaging element 34 is configured for controlling a direction of travel 36 of the traction unit 22 relative to a central longitudinal axis 38 of the traction unit 22.

In one implementation, the direction controlling ground engaging elements 34 may include a pair of steerable wheels and the driven ground engaging elements 32 may include a pair of driven wheels. An angular position of the steerable wheels may be adjusted to control the direction of travel 36 of the traction unit 22. The rotation of the driven wheels may be controlled to control movement of the traction unit 22. In another implementation, the direction controlling ground engaging elements 34 and the driven ground engaging elements 32 may be combined to include a pair of tracks. The tracks may be independently driven at the same or different rotational speeds to control both the movement of the traction unit 22 and the direction of travel 36 of the traction unit 22. The specific configuration, components, features, and operation of the driven ground engaging element 32 and the direction controlling ground engaging element 34 are understood by those skilled in the art, are not pertinent to the teachings of this disclosure, and are therefore not described in greater detail below.

The traction unit 22 may include a steering direction sensor 40. The steering direction sensor 40 is arranged to detect data related to a steering direction 42 of the traction unit 22 relative to a central longitudinal axis 38 of the traction unit 22. The central longitudinal axis 38 of the traction unit 22 may be considered a centerline of the traction unit 22 extending between a forward end and a rearward end of the traction unit 22. The steering direction sensor 40 detects data related to a direction of travel 36 relative to the central longitudinal axis 38, e.g., travel left or right of the central longitudinal axis 38. The specific implementation of the steering direction sensor 40 will depend upon the implementation of the direction controlling ground engaging element 34. For example, if the direction controlling ground engaging element 34 is configured as a pair of steerable wheels, then the steering direction sensor 40 may include an angular position sensor coupled to a component or linkage of the steering system. For example, the angular position sensor may include, but is not limited to, a rotary potentiometer, a tone wheel, etc. In other implementations, if the direction controlling ground engaging element 34 is configured as a pair of tracks, then the steering direction sensor 40 may be configured as a speed sensor associated with each track or motor thereof to detect relative speed differential therebetween.

In other implementations, the steering direction sensor 40 may be implemented as a location sensor, for example, a Global Positioning Satellite (GPS) sensor. As understood by those skilled in the art, by tracking the location of the traction unit 22 over time, the steering direction 42 may be determined. In yet other implementations, the steering direction sensor 40 may be implemented as an algorithm operable on a controller 84 and configured to determine the steering angle from one or more types of data. It should be appreciated that the steering direction sensor 40 may be implemented in some other manner not specifically described herein.

The traction unit 22 may further include a steering actuator 44. The steering actuator 44 is coupled to the direction controlling ground engaging element 34 of the traction unit 22 to control the travel direction of the traction unit 22 relative to the central longitudinal axis 38 of the traction unit 22. The specific configuration of the steering actuator 44 is dependent upon the implementation of the direction controlling ground engaging element 34. For example, if the direction controlling ground engaging element 34 is configured as a pair of steerable wheels, then the steering actuator 44 may include, but is not limited to, a steering gear, a linear actuator, or some other device and/or system of components coupled to a component or linkage of the steering system capable of rotating the steerable wheels about respective vertical axes. In other implementations, if the direction controlling ground engaging element 34 is configured as the pair of tracks, then the steering actuator 44 may be configured as a motor associated with each track to control rotational movement thereof. It should be appreciated that the steering actuator 44 may differ from the example implementations described herein. Different types of steering actuator 44s and systems therefore are understood by those skilled in the art, are not pertinent to the teachings of this disclosure, and are therefore not described in greater detail herein.

Referring to FIGS. 1 and 2, the mower implement 24 includes a frame 46 supporting a cutter system 48 configured for cutting the standing crop material, and at least one forming panel 56A, 56B, 56C configured for forming the cut crop material into the windrow. The mower implement 24 may further include a crop conditioning system 52 for conditioning the cut crop material to reduce dry-down time and/or increase digestibility of the cut crop material.

The cutter system 48 may include any mechanism that is capable of cutting the crop material. For example, in one implementation, the cutter system 48 may be configured as a rotary disc cutter bar 54. However, the cutter system 48 is not limited to the exemplary implementation of the rotary disc cutter bar 54. As such, it should be appreciated that the cutter system 48 may vary from the exemplary embodiment shown in the Figures and described herein.

The exemplary embodiment of the cutter system 48 includes a cutter bar 54 supported by the frame 46. The cutter bar 54 extends along an axis that is disposed generally transverse to a direction of travel 36 of the mower implement 24. The cutter bar 54 includes a plurality of cutting discs spaced along the cutter bar 54 for rotation about respective vertical axes. Each of the cutting discs is coupled to an upright drive shaft to which power is coupled for causing them to rotate in appropriate directions, for delivering cut crop material to an auger disposed rearward of the cutter system 48. The specific components, features and operation of the cutter system 48 are understood by those skilled in the art, are not pertinent to the teachings of this disclosure, and are therefore not described in greater detail herein.

The cutter system 48 delivers cut crop material rearward for further processing by the crop conditioning system 52. The terms "crop conditioning" or "conditioned crop material" include the processing of cut crop material to bend, crimp, and/or crack open stem and stalk portions of the cut crop material, and at least partially remove a wax material from the cut crop material, for the purpose of releasing moisture from the cut crop material, reducing dry-down time of the crop material, and/or improving digestibility of the crop material. The crop conditioning system 52 may include, but is not limited to, a pair of counter-rotated conditioning rolls, or an impeller style conditioning system. The specific components, features and operation of the crop conditioning system 52 are understood by those skilled in the art, are not pertinent to the teachings of this disclosure, and are therefore not described in greater detail herein.

The conditioned crop material is expelled rearward by the crop conditioning system 52, and is formed into a windrow or swath by the one or more forming panels 56A, 56B, 56C. The forming panels 56A, 56B, 56C may include, but are not limited to, a first forming panel 56A, e.g., a left forming panel 56A, 56B, 56C, a second forming panel 56B, e.g., a right forming panel 56A, 56B, 56C, and a horizontal swathboard 56C. The first forming panel 56A and the second forming panel 56B may each be rotated about respective vertical axis to define a width therebetween for forming a width of the windrow. The horizontal swathboard 56C may be rotated about a horizontal axis to define a distance relative to the ground surface 28 for forming a height of the windrow. The specific components, features and operation of the first and second forming panel 56Bs and the swathboard 56C are understood by those skilled in the art, are not pertinent to the teachings of this disclosure, and are therefore not described in greater detail herein.

The mower implement 24 may include a lift position sensor 58. The lift position sensor 58 is arranged to detect data related to a height 96 of the mower implement 24, and particularly the cutter system 48 and/or a structure supporting the cutter system 48, relative to the ground surface 28. For example, the lift position sensor 58 may be configured to detect and/or determine when the mower implement 24 is disposed at a cutting height for cutting the crop material, disposed at a transport height for transporting the mower implement, or disposed in an intermediate or raised position disposed between the cutting height and the transport height to establish a raised height. The cutting height may be considered the desired height of the mower implement 24 relative to the ground surface 28 when cutting crop material for specific circumstances. Although the specific value of the cutting height may vary based on different circumstances, e.g., different field conditions, crop material, crop volume, etc., the cutting height may be considered the lowest operating position of the mower implement 24 for a given circumstance. The lift position sensor 58 may include for example, but is not limited to, a position sensor configured to detect data related to a position of a component of the mower implement 24 used to raise and lower the cutter system 48, an optical sensor configured for capturing images that may be analyzed to determine position and/or height 96 of the mower implement 24 or a component thereof, a radar sensor configured for detecting a distance to the ground surface 28, a lidar sensor configured for detecting a distance to the ground surface 28, or some other type of sensor capable of sensing data related to the height 96 of the mower implement 24 relative to the ground surface 28 not described herein.

The mower implement 24 may further include a lift actuator 60. The lift actuator 60 is coupled to the mower implement 24. For example, the mower implement 24 may include a lift mechanism, with the lift actuator 60 coupled to and interconnecting the lift mechanism and the drawbar 26. The lift mechanism may include, but is not limited to, a system of linkages and/or connections that are operable to raise and lower the cutter system 48 and other components of the mower implement 24 relative to a primary support structure of the mower implement 24. The lift actuator 60 may be configured to move the lift mechanism. In one implementation, the lift actuator 60 may include, but is not limited to a linear actuator, e.g., a hydraulic cylinder or electric linear actuator, that is operable to actuate the lift mechanism. In other implementations, the lift actuator 60 may include, but is not limited to, a rotational actuator, e.g., an electric motor, that is operable to actuate the lift mechanism. In other implementations, the lift actuator 60 may be coupled to and interconnect the primary support structure of the mower implement 24 and the cutter system 48 and associated components. It should be appreciated that the lift actuator 60 may be configured in a manner not described herein. Additionally, methods and systems for raising and lowering the mower implement 24, and particularly the cutter system 48 and components associated therewith, are understood by those skilled in the art, are not pertinent to the teachings of this disclosure, and are therefore not described in greater detail herein.

Referring to FIG. 1, as described above, the mower system includes the drawbar 26. The drawbar 26 interconnects the traction unit 22 and the mower implement 24. The drawbar 26 include a first end 62 pivotably coupled to a rearward end of the traction unit 22 and a second end 64 pivotably coupled to the mower implement 24. The traction unit 22 pulls the mower implement 24 across the ground surface 28 via the drawbar 26. The drawbar 26 may be pivotably connected to each of the traction unit 22 and the mower implement 24 to enable the mower implement 24 to be positioned directly behind the traction unit 22, on a first lateral side 66 of the traction unit 22, or on a second lateral side 68 of the traction unit 22. The specific manner, components, and operation of the pivotable connections between the drawbar 26 and the traction unit 22, and between the drawbar 26 and the mower implement 24, are understood by those skilled in the art, are not pertinent to the teachings of this disclosure, and are therefore not described in greater detail herein.

The crop mower system 20 may further include a swing position sensor 70. The swing position sensor 70 may be arranged to detect data related to an angular position of the drawbar 26 relative to one of the mower implement 24 or the traction unit 22. For example, the swing position sensor 70 may be coupled to one of the drawbar 26 or the traction unit 22 and configured to detect an angular position between the drawbar 26 and the traction unit 22 relative to a generally vertical axis about which the drawbar 26 may pivot on a horizontal plane. In another example, the swing position sensor 70 may be coupled to one of the drawbar 26 or the mower implement 24 and configured to detect an angular position between the drawbar 26 and the mower implement 24 relative to a generally vertical axis about which the drawbar 26 may pivot on the horizontal plane. The swing position sensor 70 may include, but is not limited to, a rotary potentiometer for detecting a rotational angle between two components, or an optical sensor operable to detect images of the two components, which may be analyzed by the controller 84 to determine the angle therebetween. It should be appreciated that the swing position sensor 70 may include some other type of sensor capable of sensing other types of data different than the example implementations described herein.

The crop mower system 20 may further include a swing actuator 72 . The swing actuator 72 may interconnect the drawbar 26 and one of the traction unit 22 or the mower implement 24. For example, the swing actuator 72 may connect the traction unit 22 and the drawbar 26, or may connect the mower implement 24 and the drawbar 26. The swing actuator 72 is controllable to control a lateral position of the mower implement 24 relative to the central longitudinal axis 38 of the traction unit 22. For example, the swing actuator 72 may include a linear actuator, e.g., a hydraulic cylinder or an electric linear actuator, that may be extended and/or retracted to change an angular position of the drawbar 26 relative to the traction unit 22, which in turn controls a lateral position of the mower implement 24 relative to the central longitudinal axis 38 of the traction unit 22. In another implementation, the swing actuator 72 may include a rotational actuator, such as but not limited to a hydraulic motor or an electric motor, operable to rotate the drawbar 26 relative to either the traction unit 22 or the mower implement 24. The specific components, structure, and operation of the swing actuator 72 are understood by those skilled in the art, are not pertinent to the teachings of this disclosure, and are therefore not described in greater detail herein.

The crop mower system 20 may further include an object detection sensor 74. The object detection sensor 74 is arranged to detect data related to an existing headland windrow 76 and/or a standing crop edge 78 of the crop material. As used here, the existing headland windrow 76 may include a previously formed windrow arranged generally perpendicular and/or transverse to the direction of travel 36 of the crop mower system 20 during operation. As used herein, the standing crop edge 78 of the crop material may include an edge of an unharvested portion 80 of the field 30, i.e., crop that is not yet harvested, that is arranged generally perpendicular and/or transverse to the direction of travel 36 of the crop mower system 20. The standing crop edge 78 may be considered a line delineating the standing crop from a harvested region of the field 30 that was previously mowed, particularly when forming the headland region 82 of the field 30.

The object detection sensor 74 is disposed in communication with the controller 84 for communicating sensed data to the controller 84. The controller 84 may identify the existing headland windrow 76 and the standing crop edge 78 from the data sensed by the object detection sensor 74. The object detection sensor 74 may include any device or combination of devices capable of sensing data from which the controller 84 may identify the existing headland windrow 76 and the standing crop edge 78. For example, the object detection sensor 74 may include an optical sensor, e.g., a stereo camera or other imaged device operable to detect images from which the controller 84 may analyze, identify and locate the existing headland windrow 76 and the standing crop edge 78. The controller 84 may use data from a GPS location sensor in combination with the object detection sensor 74 to locate the features identified in the images. In other implementations, the object detection sensor 74 may include, but is not limited to, a radar sensor, a lidar sensor, or some other object detecting device in combination with object identification software.

The controller 84 may be disposed in communication with the various sensors and actuators described herein. The controller 84 is operable to receive signals from the various sensors described herein, and communicate control signals to the various actuators described herein. While the controller 84 is generally described herein as a singular device, it should be appreciated that the controller 84 may include multiple devices linked together to share and/or communicate information therebetween. Furthermore, it should be appreciated that the controller 84 may be located on the traction unit 22, on the mower implement 24, or located remotely from the crop mower system 20.

The controller 84 may alternatively be referred to as a computing device, a computer, a control unit, a control module, a module, etc. The controller 84 includes a processor 86, a memory 88, and all software, hardware, algorithms, connections, sensors, etc., necessary to manage and control the operation of the crop mower system 20. As such, a method may be embodied as a program or algorithm operable on the controller 84. It should be appreciated that the controller 84 may include any device capable of analyzing data from various sensors, comparing data, making decisions, and executing the required tasks.

As used herein, "controller" is intended to be used consistent with how the term is used by a person of skill in the art, and refers to a computing component with processing, memory, and communication capabilities, which is utilized to execute instructions (i.e., stored on the memory 88 or received via the communication capabilities) to control or communicate with one or more other components. In certain embodiments, the controller 84 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The controller 84 may be in communication with other components on the crop mower system 20, such as hydraulic components, electrical components, and operator inputs within an operator station of the traction unit 22. The controller 84 may be electrically connected to these other components by a wiring harness such that messages, commands, and electrical power may be transmitted between the controller 84 and the other components. Although the controller 84 is referenced in the singular, in alternative embodiments the configuration and functionality described herein can be split across multiple devices using techniques known to a person of ordinary skill in the art.

The controller 84 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 88 may include any non-transitory/tangible medium which participates in providing data or computer-readable instructions. The memory 88 may be non-volatile or volatile. Non-volatile media may include, for example, optical or magnetic disks and other persistent memory. Example volatile media may include dynamic random access memory (DRAM), which may constitute a main memory. Other examples of embodiments for memory 88 include a floppy, flexible disk, or hard disk, magnetic tape or other magnetic medium, a CD-ROM, DVD, and/or any other optical medium, as well as other possible memory devices such as flash memory.

The controller 84 includes the tangible, non-transitory memory 88 on which are recorded computer-executable instructions, including a headland turn algorithm 90. The processor 86 of the controller 84 is configured for executing the headland turn algorithm 90. The headland turn algorithm 90 implements a method of controlling the crop mower system 20, described in detail below.

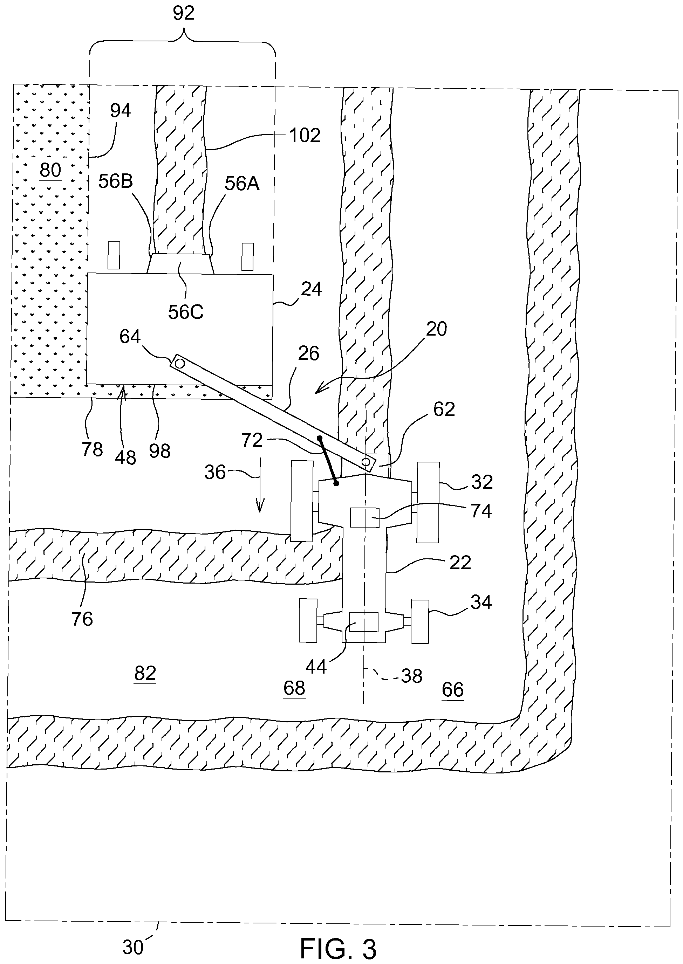

Referring to FIG. 3, to begin a harvest operation in a field 30, an operator may open up the field 30 by mowing the headland region 82 around a perimeter of the field 30. In order to form the headland region 82, the operator may complete a few, e.g., one to three, perimeter mower passes around the outer perimeter of the field 30. Each perimeter mower pass will form a respective windrow, i.e., a headland windrow 76. The windrows formed by each respective perimeter mower pass may be referred to herein as an existing headland windrow 76. With the headland formed, the central unharvested portion 80 of the field 30 remains uncut, i.e., the un-cut standing crop material remains in the central portion 80 of the field 30.

The central unharvested portion 80 of the field 30 may then be harvested by a series of back-and-forth passes through the field 30. In order to do so, the crop mower system 20 executes a first mower pass 92 along a longitudinal edge 94 of the central unharvested portion 80 of the field 30. While executing the first mower, the crop mower system 20 moves along the longitudinal edge 94 of the central portion 80 of the field 30 toward the headland region 82.

As shown in FIG. 3, as the crop mower system 20 approaches the headland region 82, while executing the first mower pass 92, the controller 84 may initiate an auto-turn sequence. In one implementation, the controller 84 may initiate the auto-turn sequence in response to a user input command instructing the controller 84 to execute the auto-turn sequence. For example, an operator may enter the user input command into the controller 84 by pressing a button, toggling a switch, contacting a touch screen display, verbal commands, etc. Upon receiving the user input command, the controller 84 may initiate the auto-turn sequence described in greater detail below.

In another implementation, the controller 84 may automatically initiate the auto-turn sequence based on detected criteria. For example, the controller 84 may identify the existing headland windrow 76 extending transverse to the current direction of travel 36 of the mower implement 24. Additionally, the controller 84 may identify the standing crop edge 78 extending transverse to the current direction of travel 36 of the mower implement 24 and positioned prior to the existing headland windrow 76 relative to the current direction of travel 36 of the mower implement 24.

The controller 84 may identify the existing headland windrow 76 and the standing crop edge 78 using data from the object detection sensor 74. For example, in one implementation, the object detection sensor 74 may include one or more optical sensors positioned to capture images in front of the mower implement 24 relative to the direction of travel 36 during operation. Using the captured images, the controller 84 may analyze the images using object detection software to identify the existing headland windrow 76 and the standing crop edge 78. The controller 84 may further use data from a location sensor to georeference the location of each of the existing headland windrow 76 and the standing crop edge 78. It should be appreciated that the controller 84 may identify the existing headland windrow 76 and/or the standing crop edge 78 using other types of data from other types of sensors not specifically described herein, such as but not limited to, data from a radar, data from a lidar, etc.

In one aspect of the disclosure, the processor 86 is operable to execute the headland turn algorithm 90 to determine a height 96 of the mower implement 24 relative to the ground surface 28 from data sensed by the lift position sensor 58. The controller 84 may use the height 96 for the mower implement 24 to control the lift actuator 60 to change and/or adjust the height 96 of the mower implement 24.

In one aspect of the disclosure, when a leading edge 98 of the cutter system 48 reaches or moves within a pre-defined distance of the standing crop edge 78, the controller 84 automatically initiates the auto-turn sequence. For example, the controller 84 may initiate the auto-turn sequence when the leading edge 98 of the cutter system 48 reaches the standing crop edge 78, or when the leading edge 98 of the cutter system 48 reaches or comes within the pre-defined distance of the standing crop edge 78. In one example implementation, the controller 84 may initiate the auto-turn sequence when the leading edge 98 of the cutter system 48 reaches a pre-defined distance of approximately one foot of the standing crop edge 78. In other implementations, the pre-defined distance may be defined to equal a value of zero, such that the controller 84 initiates the auto-turn sequence when the leading edge 98 of the cutter system 48 reaches the standing crop edge 78. It should be appreciated that the pre-defined distance may be defined to equal some other value, either before or after the standing crop edge 78, not specifically mentioned or described herein.

The controller 84 may initiate the auto-turn sequence by automatically raising the mower implement 24 from the cutting height to the raised height prior to the mower implement 24 crossing the existing headland windrow 76. The controller 84 may determine that the leading edge 98 of the cutter system 48 has "reached" the standing crop edge 78 when the leading edge 98 moves to within a defined distance of the standing crop edge 78. Accordingly, it should be appreciated that the leading edge 98 need not contact the standing crop edge 78 to have reached the standing crop edge 78, but the leading edge 98 may be deemed to have reached the standing crop edge 78 when the leading edge 98 is within the predefined distance of the standing crop edge 78. The raised height may be defined by the user or the controller 84 to include a height of the mower implement 24 relative to the ground surface 28 so that the mower implement 24 may pass over the existing headland windrow 76 without substantially disturbing the existing headland windrow 76. By doing so, the cutter system 48 of the mower implement 24 does not disturb the existing headland windrow 76 while traversing across the existing headland windrow 76. The controller 84 may raise the mower implement 24 by communicating a control signal to the lift actuator 60 to control the lift actuator 60. The control signal may include, but is not limited to, an electric control signal, a hydraulic control signal, etc. Actuation of the lift actuator 60 is operable to change the height 96 of the mower implement 24.

Additionally, the controller 84 may determine a position of the mower implement 24 relative to the traction unit 22 from data sensed by the swing position sensor 70. For example, the controller 84 may determine that the mower implement 24 is currently disposed on the first lateral side 66 of the traction unit 22, or is disposed on the second lateral side 68 of the traction unit 22. The controller 84 may use the position of the mower implement 24 relative to the traction unit 22 to control the swing actuator 72 to change and/or adjust the position of the mower implement 24 relative to the traction unit 22.

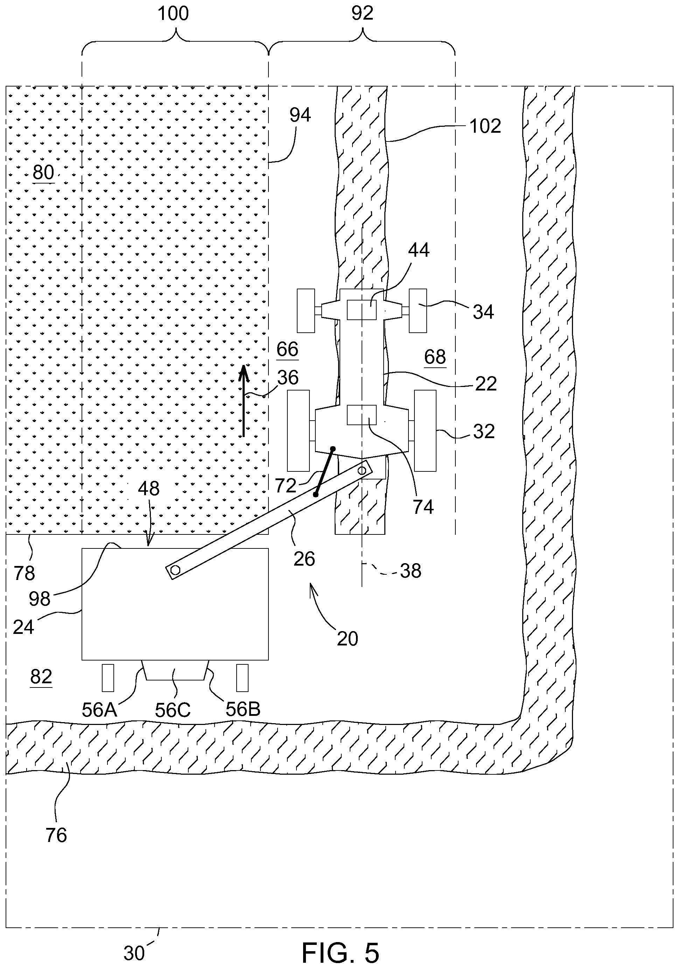

For example, when the leading edge 98 of the cutter system 48 reaches or comes within a pre-defined distance of the standing crop edge 78, the controller 84 may automatically swing the mower implement 24 relative to the traction unit 22 form one side of the traction unit 22 to the other side of the traction unit 22. For example, the controller 84 may swing the mower implement 24 from the second lateral side 68 of the traction unit 22, such as shown in FIG. 3, to the first lateral side 66 of the traction unit 22, such as shown in FIG. 5. By doing so, the mower implement 24 will be positioned on the appropriate lateral side of the traction unit 22 to begin a second mower pass 100. It should be appreciated that a lateral offset the mower implement 24 relative to the central longitudinal axis 38 when positioned on the second lateral side 68 for the second mower pass 102 may be the same or different than the lateral offset of the mower implement 24 when positioned on the first lateral side 66 for the first mower pass 92. The controller 84 may swing the drawbar 26 relative to the traction unit 22 by communicating a control signal to the swing actuator 72 to control the position of the drawbar 26 relative to the traction unit 22. The control signal may include, but is not limited to, an electric control signal, a hydraulic control signal, etc. Actuation of the swing actuator 72 is operable to change the location or position of the mower implement 24 relative to the traction unit 22.

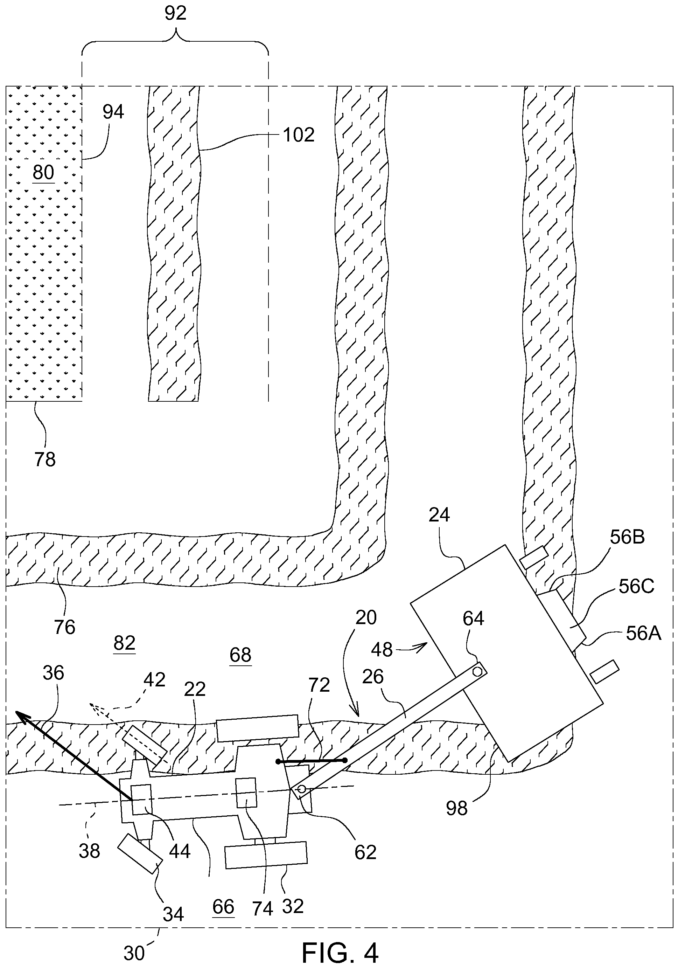

Referring to FIG. 4, the controller 84 may further determine a steering direction 42 of the traction unit 22 relative to the central longitudinal axis 38 of the traction unit 22 from data sensed by the steering direction sensor 40. The controller 84 may use the steering direction 42 to control the steering actuator 44 to change and/or alter the steering direction 42. For example, when the leading edge 98 of the cutter system 48 reaches or comes within a pre-defined distance of the standing crop edge 78, the controller 84 may automatically align the traction unit 22 and the mower implement 24 relative to the standing crop edge 78 for the second mower pass 100. When the traction unit 22 is aligned for the second mower pass 100, the traction unit 22 is positioned to straddle a first windrow 102 formed during the first mower pass 92 and the mower implement 24 is positioned to cut the standing crop material adjacent the first windrow 102 from the first mower pass 92. The controller 84 may align the traction unit 22 based on the current steering direction 42 of the traction unit 22. For example, the controller 84 may control the steering actuator 44 to execute a "U" turn to either the left or the right based on the current steering direction 42 and the location of the standing crop edge 78. The controller 84 may control the steering actuator 44 to change the steering direction 42 of the traction unit 22 relative to the central longitudinal axis 38 of the traction unit 22 by communicating a control signal to the steering actuator 44. The control signal may include, but is not limited to, an electric control signal, a hydraulic control signal, etc. Actuation of the steering actuator 44 is operable to change the steering direction 42 of the traction unit 22.

Referring to FIG. 5, the auto-turn sequence includes the controller 84 automatically lowering the mower implement 24 to the cutting height. For example, when the leading edge 98 of the cutter system 48 moves past the existing headland windrow 76 during the second mower pass 100, the controller 84 may automatically lower the mower implement 24 from the raised height to the cutting height prior to the leading edge 98 of the cutter system 48 crossing the standing crop edge 78. The controller 84 may use the height 96 for the mower implement 24 to control the lift actuator 60 to change and/or adjust the height 96 of the mower implement 24. By doing so, the cutter system 48 of the mower implement 24 may not significantly disturb the existing headland windrow 76 while traversing across the existing headland windrow 76 during alignment for the second mower pass 100. The controller 84 may lower the mower implement 24 by communicating a control signal to the lift actuator 60 to control the lift actuator 60. The control signal may include, but is not limited to, an electric control signal, a hydraulic control signal, etc. Actuation of the lift actuator 60 is operable to change the height 96 of the mower implement 24.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A crop mower system (20) comprising:
a traction unit (22) configured to move relative to a ground surface (28);
a mower implement (24) having a cutter system (48) configured for cutting standing crop material and a forming panel (56A, 56B, 56C) configured for forming the cut crop material into a windrow;
a drawbar (26) having a first end (62) pivotably coupled to a rearward end of the traction unit (22) and a second end (64) pivotably coupled to the mower implement (24), whereby the traction unit (22) pulls the mower implement (24) across the ground surface (28);
a controller (84) including a processor (86) and a memory (88) having a headland turn algorithm (90) stored thereon, wherein the processor (86) is operable to execute the headland turn algorithm (90) to:
initiate an auto-turn sequence;
automatically raise the mower implement (24) from a cutting height to a raised height;
automatically change a lateral position of the mower implement (24) relative to the traction unit (22) to reposition the mower implement (24) from a first lateral side (66) of the traction unit (22) to a second lateral side (68) of the traction unit (22); and
automatically lower the mower implement (24) from the raised height to the cutting height after the lateral position of the mower implement (24) has been changed from the first lateral side (66) of the traction unit (22) to the second lateral side (68) of the traction unit (22).

2. The crop mower system (20) set forth in claim 1, wherein the processor (86) is operable to execute the headland turn algorithm (90) to identify an existing headland windrow (76) extending transverse to a current direction of travel (36) of the mower implement (24) while executing a first mower pass (92).

3. The crop mower system (20) set forth in claim 1 or 2, wherein the processor (86) is operable to execute the headland turn algorithm (90) to identify a standing crop edge (78) extending transverse to the current direction of travel (36) of the mower implement (24) and positioned prior to the existing headland windrow (76) relative to the current direction of travel (36) of the mower implement (24) while executing the first mower pass (92).

4. The crop mower system (20) according to at least one of the preceding claims, wherein the processor (86) is operable to execute the headland turn algorithm (90) to automatically initiate the auto-turn sequence when a leading edge (98) of the cutter system (48) is within a pre-defined distance of the standing crop edge (78).

5. The crop mower system (20) according to at least one of the preceding claims, wherein the processor (86) is operable to execute the headland turn algorithm (90) to automatically raise the mower implement (24) from the cutting height to the raised height prior to the mower implement (24) crossing the existing headland windrow (76), whereby the cutter system (48) of the mower implement (24) passes over the existing headland windrow (76) for reducing disturbance of the existing headland windrow (76).

6. The crop mower system (20) according to at least one of the preceding claims, wherein the processor (86) is operable to execute the headland turn algorithm (90) to, when a leading edge (98) of the cutter system (48) moves within a pre-defined distance of the standing crop edge (78), automatically align the traction unit (22) relative to the standing crop edge (78) for a second mower pass (100), whereby the traction unit (22) is positioned to straddle a first windrow (102) formed during the first mower pass (92) and the mower implement (24) is positioned to cut the standing crop material adjacent the first windrow (102) from the first mower pass (92).

7. The crop mower system (20) according to at least one of the preceding claims, wherein the processor (86) is operable to execute the headland turn algorithm (90) to automatically lower the mower implement (24) from the raised height to the cutting height when the leading edge (98) of the cutter system (48) moves past the existing headland windrow (76) and prior to the leading edge (98) of the cutter system (48) crossing the standing crop edge (78) during the second mower pass (100).

8. The crop mower system (20) according to at least one of the preceding claims, further comprising a swing position sensor (70) arranged to detect data related to an angular position of the drawbar (26) relative to one of the mower implement (24) or the traction unit (22).

9. The crop mower system (20) according to at least one of the preceding claims, wherein the processor (86) is operable to execute the headland turn algorithm (90) to determine a position of the mower implement (24) relative to the traction unit (22) from data sensed by the swing position sensor (70).

10. The crop mower system (20) according to at least one of the preceding claims, further comprising a swing actuator (72) interconnecting the drawbar (26) and one of the traction unit (22) or the mower implement (24), wherein the processor (86) is operable to execute the headland turn algorithm (90) to control the swing actuator (72) to change the lateral position of the mower implement (24) relative to the traction unit (22).

11. The crop mower system (20) according to at least one of the preceding claims, further comprising a lift position sensor (58) arranged to detect data related to a height of the mower implement (24) relative to the ground surface (28).

12. The crop mower system (20) according to at least one of the preceding claims, wherein the processor (86) is operable to execute the headland turn algorithm (90) to determine a height of the mower implement (24) relative to the ground surface (28) from data sensed by the lift position sensor (58).

13. The crop mower system (20) according to at least one of the preceding claims, further comprising a steering direction sensor (40) arranged to detect data related to a steering direction (42) of the traction unit (22) relative to a central longitudinal axis (38) of the traction unit (22).

14. The crop mower system (20) according to at least one of the preceding claims, wherein the processor (86) is operable to execute the headland turn algorithm (90) to determine the steering direction (42) of the traction unit (22) relative to the central longitudinal axis (38) of the traction unit (22) from data sensed by the steering direction sensor (40).

15. The crop mower system (20) according to at least one of the preceding claims, further comprising an object detection sensor (74) arranged to detect data related to an existing headland windrow (76) and a standing crop edge (78), wherein the object detection sensor (74) is disposed in communication with the controller (84) for communicating sensed data to the controller (84) whereby the controller (84) may identify the existing headland windrow (76) and the standing crop edge (78).
